# EUROPEAN PATENT APPLICATION

(11) **EP 4 109 820 A2**
(43) Date of publication of application: **28.12.2022**
(21) Application number: 22205723.4
(22) Date of filing: 07.11.2022
(51) Int. Cl.: H04L 9/40

(54) **METHODS AND SYSTEMS FOR DATA PROCESSING, ELECTRONIC DEVICE AND STORAGE MEDIUM**

(30) Priority: 08.11.2021 CN 202111313181
(71) Applicant: Apollo Intelligent Connectivity (Beijing) Technology Co., Ltd., Beijing 100176 (CN)
(72) Inventor: CAO, Liang, Beijing, 100176 (CN); CUI, Zhiyang, Beijing, 100176 (CN)
(74) Representative: Maiwald GmbH

(57) **Abstract**

The invention provides a method and a system for data processing, an electronic device, and a readable storage medium, which relates to the fields of intelligent cockpit, automatic driving and Internet of Vehicles. The method includes: in response to a data access request sent by a client for a target vehicle, generating symmetric keys for symmetrically encrypting operation data of the target vehicle, in which the symmetric keys are generated based on a user ID and a primary public key for a third party, and the user ID is carried in the data access request; obtaining target encrypted data by symmetrically encrypting the operation data using the symmetric keys; and sending the target encrypted data to the client. The security of the operation data of the target vehicle is ensured.

## Description

### TECHNICAL FIELD

The invention relates to the data processing field, in particular to data processing and intelligent traffic technologies, which can be applied to scenarios such as intelligent cockpit, automatic driving and Internet of Vehicles.

### BACKGROUND

The vehicle operation data belongs to the personal privacy data of the vehicle owner, which is only available for the owner or relevant law enforcement officers authorized for law enforcement, other irrelevant persons should not be able to read or even modify the data at will.

However, there is no solution in the related art to protect the privacy data of the vehicle operation data.

### SUMMARY

The invention provide a method for data processing, an apparatus for data processing, a system for data processing, an electronic device, a readable storage medium and a computer program product, to ensure the safety of the vehicle operation data.

According to a first aspect of the invention, a method for data processing is performed by an operation data recording device. The method includes: in response to a data access request sent by a client for a target vehicle, generating symmetric keys for symmetrically encrypting operation data of the target vehicle, in which the symmetric keys are generated based on a user ID and a primary public key for a third party, and the user ID is carried in the data access request; obtaining target encrypted data by symmetrically encrypting the operation data using the symmetric keys; and sending the target encrypted data to the client.

According to a second aspect of the invention, a method for data processing is performed by an authentication center server. The method includes: in response to a data reading request of a client for target encrypted data, determining a primary private key for a third party, in which the target encrypted data is obtained by an operation data recording device symmetrically encrypting operation data of a target vehicle using symmetric keys , and the symmetric keys are generated by the operation data recording device based on a user ID and a primary public key for the third party; determining the symmetric keys based on the primary private key and the user ID; and sending the symmetric keys to the client.

According to a third aspect of the invention, a system for data processing is provided. The system includes: a client, an operation data recording device, and an authentication center server. The client is configured to send a data access request for a target vehicle to the operation data recording device; receive target encrypted data sent by the operation data recording device; send a data reading request for the target encrypted data to the authentication center server; receive the symmetric keys sent by the authentication center server; and obtain operation data by decrypting the target encrypted data using the symmetric keys. The operation data recording device is configured to, in response to the data access request, generate the symmetric keys for symmetrically encrypting the operation data, in which the symmetric keys are generated based on a user ID and a primary public key for a third party, and the user ID is carried in the data access request; obtain the target encrypted data by symmetrically encrypting the operation data using the symmetric keys; and send the target encrypted data to the client. The authentication center server is configured to, in response to the data reading request, determine a primary private key for the third party; determine the symmetric keys based on the primary private key and the user ID; and send the target encrypted data to the client.

According to a fourth aspect of the invention, a method for data processing is performed by an operation data recording device. The method includes: in response to a data access request sent by a client for a target vehicle, generating a first key for performing user identity verification, in which the first key is generated by the operation data recording device based on a user ID and a primary public key for a third party, and the user ID is carried in the data access request; obtaining a second key sent by the client for performing user identity verification, in which the second key is generated based on the user ID and a primary private key for the third party by an authentication center server; and in response to the first key being the same as the second key, sending operation data corresponding to the target vehicle to the client.

According to a fifth aspect of the invention, a system for data processing is provided. The system includes: a client, an operation data recording device, and an authentication center server. The client is configured to send a data access request for a target vehicle to the operation data recording device; send a data reading request for the target vehicle to the authentication center server; receive a second key sent by the authentication center server; send the second key to the operation data recording device; receive operation data of the target vehicle sent by the operation data recording device. The operation data recording device is configured to, in response to the data access request, generate a first key for performing user identity verification, in which the first key is generated based on a user ID and a primary public key for a third party, and the user ID is carried in the data access request; obtain the second key sent by the client; and in response to the first key being the same as the second key, send the operation data of the target vehicle to the client. The authentication center server is configured to, in response to the data reading request, determine a primary private key for the third party; determine the second key for performing user identity verification based on the primary private key and the user ID; and send the second key to the client.

According to a sixth aspect of the invention, an electronic device is provided. The electronic device includes: at least one processor and a memory communicatively coupled to the at least one processor. The memory stores instructions executable by the at least one processor, and when the instructions are executed by the at least one processor, the at least one processor is enabled to implement the method according to any embodiment of the invention.

According to a seventh aspect of the invention, a non-transitory computer-readable storage medium storing computer instructions is provided. The computer instructions are configured to cause a computer to implement the method according to any embodiment of the invention.

According to the technical solution of the invention, after the client initiates the data access request for the target vehicle, the operation data recording device generates the symmetric keys for symmetrically encrypting the operation data in response to the data access request, and symmetrically encrypts the operation data using the symmetric keys to obtain the target encrypted data and send it to the client. The client needs to obtain the symmetric keys from the authentication center server and decode the target encrypted data to obtain the operation data. Thus, the security of the operation data of the target vehicle is ensured.

In addition, in the process of encrypting and decrypting the operation data by adopting the technology of the invention, the user ID is used as the public key of the user, so that the key management process can be simplified.

It should be understood that the content described in this section is not intended to identify key or important features of the embodiments of the invention, nor is it intended to limit the scope of the invention. Additional features of the invention will be easily understood based on the following description.

### BRIEF DESCRIPTION OF THE DRAWINGS

The drawings are used to better understand the solution and do not constitute a limitation to the invention.
FIG. 1 is a process diagram of a first method for data processing according to an embodiment of the invention.
FIG. 2 is a flowchart of a first method for data processing according to an embodiment of the invention.
FIG. 3 is a flowchart of a second method for data processing according to an embodiment of the invention.
FIG. 4 is a schematic diagram of a first apparatus for data processing according to an embodiment of the invention.
FIG. 5 is a schematic diagram of a first apparatus for data processing according to an embodiment of the invention.
FIG. 6 is a schematic diagram of a first system for data processing according to an embodiment of the invention.
FIG. 7 is a process diagram of another method for data processing according to an embodiment of the invention.
FIG. 8 is a flowchart of another method for data processing according to an embodiment of the invention.
FIG. 9 is a schematic diagram of a second apparatus for data processing according to an embodiment of the invention.
FIG. 10 is a schematic diagram of an electronic device according to an embodiment of the invention.

### DETAILED DESCRIPTION

The following describes the embodiments of the invention with reference to the accompanying drawings, which includes various details of the embodiments of the invention to facilitate understanding, which shall be considered merely exemplary. For clarity and conciseness, descriptions of well-known functions and structures are omitted in the following description.

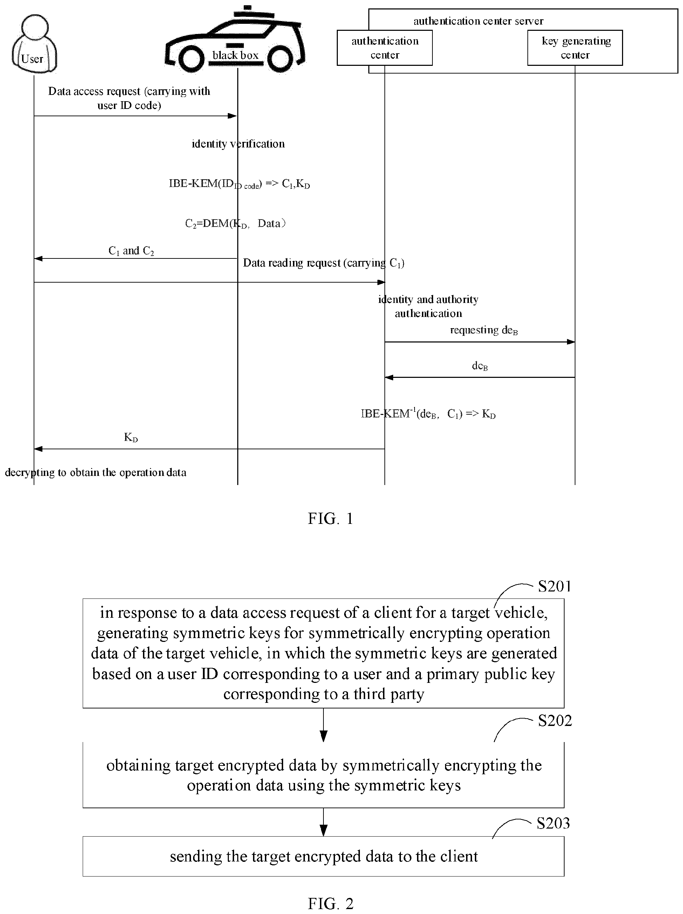

The method for data processing according to the embodiment of the invention includes a process of encrypting and decrypting the operation data of the target vehicle. In detail, FIG. 1 is a schematic diagram of a method for first data processing according to an embodiment of the invention. In detail, details on the encryption process of the operating data are shown in FIG. 2. FIG. 2 is a flowchart of a first method for data processing according to an embodiment of the invention. The process includes the following steps.

At block S201, in response to a data access request of a client for a target vehicle, symmetric keys for symmetrically encrypting operation data of the target vehicle are generated, in which the symmetric keys are generated based on a user ID corresponding to the client and a primary public key corresponding to a third party.

At block S202, target encrypted data is obtained by symmetrically encrypting the operation data using the symmetric keys.

At block S203, the target encrypted data is sent to the client.

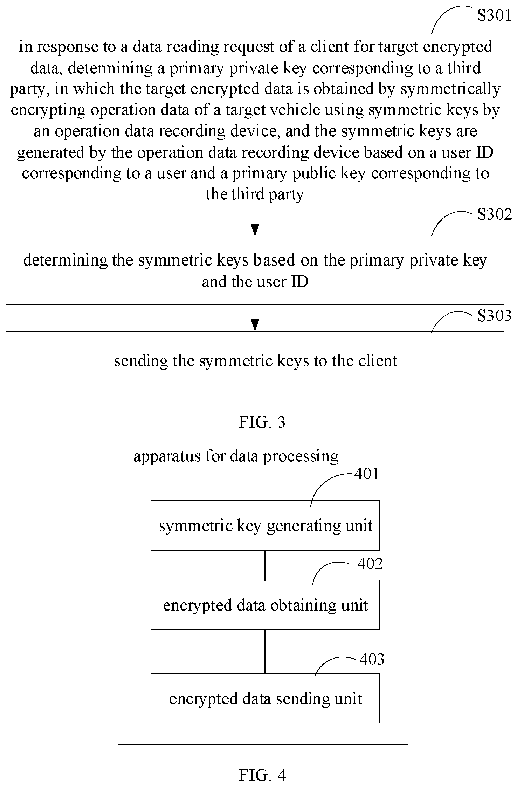

In addition, in the process of decrypting the operation data, the symmetric keys need to be determined to decrypt the encrypted operation data. The process of determining the symmetric keys is shown in FIG. 3. FIG. 3 is a flowchart of a second method for data processing according to an embodiment of the invention.

At block S301, in response to a data reading request sent by a client for target encrypted data, a primary private key corresponding to a third party is determined, in which the target encrypted data is obtained by symmetrically encrypting operation data of a target vehicle using symmetric keys by an operation data recording device, and the symmetric keys are generated by the operation data recording device based on a user ID corresponding to the client and a primary public key corresponding to the third party.

At block S302, the symmetric keys are determined based on the primary private key and the user ID.

At block S303, the symmetric keys are sent to the client.

In the method for data processing according to the embodiment of the invention, after the client initiates the data access request for the target vehicle, the operation data recording device generates the symmetric keys for symmetrically encrypting the operation data in response to the data access request, and symmetrically encrypts the operation data using the symmetric keys to obtain the target encrypted data and send it to the client. The client needs to obtain the symmetric keys from the authentication center server and decode the target encrypted data to obtain the operation data. Thus, the security of the operation data of the target vehicle is ensured.

In addition, in the process of encrypting and decrypting the operation data by adopting the method for data processing of the invention, the user ID is used as the public key of the user, so that the key management process can be simplified.

In the method for data processing according to the embodiments of the invention, the execution body corresponding to the encryption process is an operation data recording device. The operation data recording device is a device preconfigured on a vehicle for recording the operation data of the vehicle, and the basic functions are similar to that of the on-board black box on the aircraft.

In the decryption process, the execution subject of the process of determining the symmetric keys is an authentication center server. The authentication center server is a server or a server cluster deployed by a third party for performing permission authentication.

The client is an electronic device used to run target software, programs and applications, and the electronic device has a data storage function. The target software, programs and applications are software, programs and applications that have the function of reading operation data.

The operation data includes, but not limited to, vehicle trajectory data, road information collected by the vehicle-mounted road collection device, and vehicle operation data.

The user includes vehicle owners and law enforcement officers. The law enforcement officer refers to the staff of administrative law enforcement agencies or authorized organizations, including but not limited to relevant staff of the ministries such as Transport, Public Security, Industry and Information Technology, such as the staff of accident identification center. Correspondingly, the third party refers to the administrative departments that manage works of Transport, Public Security, Industry and Information Technology.

The user ID is generally an ID code used to uniquely identify user identity, including but not limited to mobile phone number of the user, mailbox number, International Mobile Equipment Identity (IMEI) of the electronic device currently used by the user.

As illustrated in FIG. 1, when the user wants to read the operation data, it sends a data access request for the target vehicle to the operation data recording device. The data access request carries the user ID.

When the operation data recording device obtains the data access request, it parses the data access request and obtains the user ID. Afterwards, in order to further ensure the security of the operation data, before generating the symmetric keys to encrypt the operation data symmetrically, the identity and permissions of the user are confirmed. Only when the user is the target user, the symmetric keys are further generated to symmetrically encrypt the operation data.

Generating the symmetric keys includes: generating the symmetric keys using the user ID and a primary public key based on a preset key encapsulation mechanism. Since the SM9 algorithm is adopted to simplify the key management process, the method for data processing according to the embodiments of the invention is implemented based on the SM9 identification and encryption algorithm. Correspondingly, the formula for generating the symmetric keys based on the preset key encapsulation mechanism, is: IBE-KEM(ID _{ID code}) => C₁,K_{D.}, in which, C₁ is the encrypted user ID, i.e., the symmetric keys.

It should be noted that when generating the symmetric keys, not only the user ID and the primary public key are used, parameters such as the SM9 encryption algorithm system parameters and identifiers are also used. The parameters such as the primary public key, the SM9 encryption algorithm system parameters, and the identifiers are pre-packaged in the operation data recording device. If the above three parameters are not upgraded, these three parameters may not keep changed.

Determining the target user includes: determining the identity of the user based on the user ID; and determining the user as the target user in response to the identity of the user satisfying preset conditions.

The target user includes, but not limited to, vehicle owners and law enforcement officers. Determining the identity of the user based on the user ID includes: encoding and storing different user IDs according to a preset format; after obtaining the user ID carried in the data access request, determining whether the user ID carried in the data access request matches the stored user ID; if so, determining that the identity of the user satisfies the preset conditions and belongs to the target user having the permission for data access.

In detail, there are two solutions for encoding different user IDs according to the preset format.

In the first solution, if the user is the vehicle owner:
department: www.department.gov.cn;
province: www.departmentgov.cn/Liaoning;
city: www.department.gov.cn/Liaoning/Dalian;
user name: www.department.gov.cn/Liaoning/Dalian/Xiaowang007.

In the second solution, if the user is a law enforcement officer:
department: Accident Identification Center of the Ministry of XXX (Transport, Public Security, Industry and Information Technology) of the People's Republic of China;
province: Accident Identification Center of the Ministry of XXX (Transport, Public Security, Industry and Information Technology) of Liaoning Province, People's Republic of China;
city: Accident Identification Center of the Ministry of XXX (Transport, Public Security, Industry and Information Technology), Dalian, Liaoning Province, People's Republic of China;
staff name: Accident Identification Center of the Ministry of XXX (Transport, Public Security, Industry and Information Technology) of, Dalian, Liaoning Province, People's Republic of China /Xiao Wang 007.

After generating the symmetric encryption, the operation data recording device will further perform symmetric encryption on the operation data using the symmetric keys based on the preset data encapsulation mechanism, to generate the target encrypted data. Similarly, since the SM9 algorithm can simplify the key management process, the method for data processing according to the embodiments of the invention is implemented based on the SM9 identification and encryption algorithm. Correspondingly, the formula for symmetrically encrypting the operation data based on the preset data encapsulation mechanism is: C₂=DEM(K_{D},Data), in which C₂ is the target encrypted data.

After obtaining C₁ and C₂, C₁ and C₂ are sent to the client. The user logs in the authentication center server again, and sends the data reading request for the target encrypted data to the authentication center server, the data reading request carries C₁.

In order to further ensure the safety of the operation data, before generating the symmetric keys to decrypt the operation data, the authentication center server can also confirm the identity and the authority of the user firstly, only when the user is the target user, the symmetric keys may be further generated to perform the symmetric decryption of the operation data.

For the law enforcement officer, the law enforcement officer belongs to public officials of a third party, it can be determined that the data can be further read only when their identity and permissions meet the requirements. Therefore, in order to improve the identity verification efficiency, when the target user is a target law enforcement officer, determining the target user includes: determining the identity of the user based on the user ID; and in response to the identity of the user satisfying the preset conditions, determining the user as the target user.

In order to improve the security of the operation data, when the target user is the vehicle owner, determining the target user includes: performing real-name authentication on the user; in response to the real-name authentication being passed, determining an identity of the user based on the user ID; and in response to the identity of the user satisfying preset conditions, determining the user as the target user.

After the identity authentication, the authentication center server may obtain the primary private key from a preset Key Generation Center (KGC), and further generate the symmetric keys using the primary private key and the user ID based on the preset key decapsulation mechanism. Similarly, since the SM9 algorithm can simplify the key management process, the method for data processing according to the embodiments of the invention is implemented based on the SM9 identification and encryption algorithm. Correspondingly, the formula for generating the symmetric keys based on the preset key decapsulation mechanism is: IBE-KEM⁻¹(de_{B}, C₁), where de_{B} is the primary public key.

After the authentication center server generates the symmetric keys, it may send the keys to the client, and the client may further decrypt the target encrypted data based on the symmetric keys to obtain the decrypted operation data.

It should be noted that, when obtaining the operation data of the target vehicle, the permission and authorization of the owner of the target vehicle need to be acquired.

As illustrated in FIG. 4, a first apparatus for data processing of the embodiment of the invention includes: a symmetric key generating unit 401, an encrypted data obtaining unit 402 and an encrypted data sending unit 403.

The symmetric key generating unit 401 is configured to, in response to a data access request of a client for a target vehicle, generate symmetric keys for symmetrically encrypting operation data of the target vehicle, in which the symmetric keys are generated based on a user ID corresponding to a user and a primary public key corresponding to a third party.

The encrypted data obtaining unit 402 is configured to obtain target encrypted data by symmetrically encrypting the operation data using the symmetric keys.

The encrypted data sending unit 403 is configured to send the target encrypted data to the client.

In an embodiment, the symmetric key generating unit 401 includes: a symmetric key generating sub-unit, configured to, in response to the user being a target user, generate the symmetric keys using the user ID and the primary public key based on a preset key encapsulation mechanism.

In an embodiment, the symmetric key generating unit 401 includes: an identity authority determining sub-unit, configured to determine an identity of the user based on the user ID; and a target user determining sub-unit, configured to, in response to the identity of the user satisfying preset conditions, determine the user as the target user.

In an embodiment, the encrypted data obtaining unit 402 includes: an encrypted data obtaining sub-unit, configured to generate the target encrypted data by symmetrically encrypting the operation data using the symmetric keys based on a preset data encapsulation mechanism.

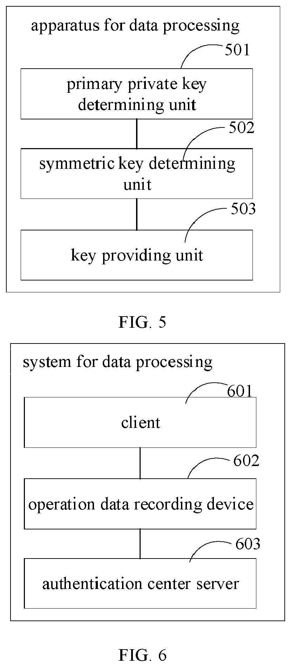

As illustrated in FIG. 5, a first apparatus for data processing of the embodiment of the invention includes: a primary private key determining unit 501, a symmetric key determining unit 502 and a key providing unit 503.

The primary private key determining unit 501 is configured to, in response to a data reading request of a client for target encrypted data, determine a primary private key corresponding to a third party, in which the target encrypted data is obtained by symmetrically encrypting operation data of a target vehicle using symmetric keys by an operation data recording device, and the symmetric keys are generated by the operation data recording device based on a user ID corresponding to a user and a primary public key corresponding to the third party.

The symmetric key determining unit 502 is configured to determine the symmetric keys using the primary private key and the user ID.

The key providing unit 503 is configured to send the symmetric keys to the client.

In an embodiment, the primary private key determining unit 501 includes: a primary private key generating sub-unit, configured to, in response to the user being a target user, generate the primary private key randomly by a random number generator.

In an embodiment, the primary private key determining unit 501 includes:
a first identity determining sub-unit, configured to, in response to the target user being a target law enforcement officer, determine an identity of the user based on the user ID; and
a first target user determining sub-unit, configured to, in response to the identity of the user satisfying preset conditions, determine the user as the target user.

In an embodiment, the primary private key determining unit 501 includes:
a real-name authentication sub-unit, configured to perform user real-name authentication;
a second identity determining sub-unit, configured to, in response to the user real-name authentication being passed, determine an identity of the user based on the user ID, and in response to the identity of the user satisfying preset conditions, determine the user as the target user.

In an embodiment, the symmetric key determining unit 502 includes: a symmetric key generating sub-unit, configured to generate the symmetric keys using the primary private key and the user ID based on a preset key decapsulation mechanism.

As illustrated in FIG. 6, a system for data processing is provided by the embodiments of the invention. The system includes: a client 601, an operation data recording device 602, and an authentication center server 603.

The client 601 is configured to send a data access request for a target vehicle to the operation data recording device 602; receive target encrypted data sent by the operation data recording device 602; send a data reading request for the target encrypted data to the authentication center server 603; receive the symmetric keys sent by the authentication center server 603; and obtain operation data by decrypting the target encrypted data using the symmetric keys.

The operation data recording device 602 is configured to, in response to the data access request, generate the symmetric keys for symmetrically encrypting the operation data, in which the symmetric keys are generated based on a user ID corresponding to a user and a primary public key corresponding to a third party; obtain the target encrypted data by symmetrically encrypting the operation data using the symmetric keys; and send the target encrypted data to the client 601.

The authentication center server 603 is configured to, in response to the data reading request, determine a primary private key corresponding to the third party; determine the symmetric keys using the primary private key and the user ID; and send the target encrypted data to the client 601.

In an embodiment, the operation data recording device 602 includes: a symmetric key generating sub-unit, configured to, in response to the user being a target user, generate the symmetric keys using the user ID and the primary public key based on a preset key encapsulation mechanism.

In an embodiment, the operation data recording device 602 includes:
an identity authority determining sub-unit, configured to determine an identity of the user based on the user ID; and
a target user determining sub-unit, configured to, in response to the identity of the user satisfying preset conditions, determine the user as the target user.

In an embodiment, the operation data recording device 602 includes: an encrypted data obtaining sub-unit, configured to generate the target encrypted data by symmetrically encrypting the operation data using the symmetric keys based on a preset data encapsulation mechanism.

In an embodiment, the authentication center server 603 further includes: a primary private key generating sub-unit, configured to, in response to the user being a target user, generate the primary private key randomly by a random number generator.

In an embodiment, the authentication center server 603 further includes:
a first identity determining sub-unit, configured to, in response to the target user being a target law enforcement officer, determine an identity of the user based on the user ID; and
a first target user determining sub-unit, configured to, in response to the identity of the user satisfying preset conditions, determine the user as the target user.

In an embodiment, the authentication center server 603 further includes:
a real-name authentication sub-unit, configured to perform user real-name authentication;
a second identity determining sub-unit, configured to, in response to the user real-name authentication being passed, determine an identity of the user based on the user ID, and in response to the identity of the user satisfying preset conditions, determine the user as the target user.

In an embodiment, the authentication center server 603 further includes: a symmetric key generating sub-unit, configured to generate the symmetric keys using the primary private key and the user ID based on a preset key decapsulation mechanism.

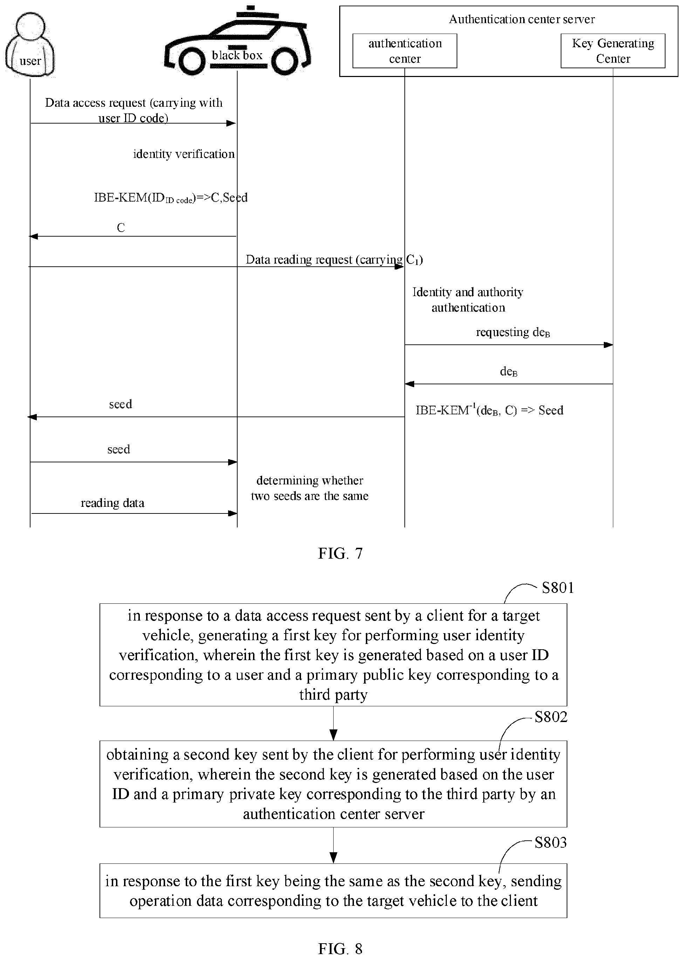

As illustrated in FIG. 7, the embodiment of the invention further provides another method for data processing. FIG. 7 is a process diagram of another method for data processing according to an embodiment of the invention.

FIG. 7 includes an operation data recording device for generating a first key and perform key comparison verification, an authentication center server for generating a second key and a client for requesting data access.

In the embodiment of the invention, the steps are executed by the operation data recording device as shown in FIG. 8. FIG. 8 is a flowchart of another method for data processing according to an embodiment of the invention.

At block S801, in response to a data access request sent by a client for a target vehicle, a first key for performing user identity verification is generated, in which the first key is generated based on a user ID corresponding to a user and a primary public key corresponding to a third party.

At block S802, a second key sent by the client for performing user identity verification is obtained, in which the second key is generated based on the user ID and a primary private key corresponding to the third party by an authentication center server.

At block S803, in response to the first key being the same as the second key, operation data corresponding to the target vehicle is sent to the client.

In the method for data processing according to the embodiment of the invention, after the client initiates the data access request for the target vehicle, the operation data recording device may generate the first key in response to the data access request, and obtain the second key sent by the client and obtained from the authentication center server. Only when the first key is the same as the second key, the operation data corresponding to the target vehicle is sent to the client. Thus, the security of the operation data of the target vehicle is guaranteed.

In addition, in the process of encrypting and decrypting the operation data with the method for data processing of the embodiments of the invention, the user ID of the user is used as the public key of the user, so that the key management process can be simplified.

As illustrated in FIG. 7, when the user wants to read the operation data, a data access request for the target vehicle may be sent to the operation data recording device. The data access request carries the user ID.

When the operation data recording device obtains the data access request, it may parse the data access request and obtain the user ID. Afterwards, in order to further ensure the security of the operation data, before generating the first key, the identity and authority of the user can also be confirmed, and the first key may be further generated only when the user is the target user.

Generating the first key includes: in response to the data access request, generating the first key using the user ID and the primary public key based on a preset key encapsulation mechanism. The SM9 algorithm can simplify the key management process. The method for data processing according to the embodiments of the invention is implemented based on the SM9 identification and encryption algorithm. Correspondingly, the formula for generating the first key based on the preset key encapsulation mechanism is: IBE-KEM(ID _{ID code})=>C,Seed, in which C is the encrypted user ID, and Seed is the first key.

After the operation data recording device obtains Seed and C, C may be provided to the client. The client may send the data reading request for the target vehicle to the authentication center server, and the data reading request carries C.

In response to the data reading request, the authentication center server may firstly determine the corresponding primary private key of the third party; determine the second key for performing user identity verification based on the primary private key and the user ID; and send the second key to the client. After obtaining the second key, the client may send the second key to the operation data recording device.

In order to further ensure the safety of operation data, before generating the second key, the authentication center server can also confirm the identity and authority of the user firstly, only when the user is the target user, the second key is further generated.

For the law enforcement officer, the law enforcement officer belongs to public officials of a third party, it can be determined that the data can be further read only when their identity and permissions meet the requirements. Therefore, in order to improve the identity verification efficiency, when the target user is a target law enforcement officer, determining the target user include: determining the identity of the user based on the user ID; and in response to the identity of the user satisfying preset conditions, determining the user as the target user.

In order to improve the security of the operation data, when the target user is the vehicle owner, determining the target user includes: performing real-name authentication on the user; in response to the real-name authentication being passed, determining an identity of the user based on the user ID; and in response to the identity of the user satisfying preset conditions, determining the user as the target user.

In addition, generating the second key includes: requesting the KGC to obtain the primary private key, and generate the second key using the primary private key and the user ID based on the preset key decapsulation mechanism. Similarly, since the SM9 algorithm can simplify the key management process, the method for data processing according to the embodiments of the invention is implemented based on the SM9 identification and encryption algorithm. Correspondingly, the formula for generating the second key based on the preset key decapsulation mechanism is: IBE-KEM⁻¹(de_{B}, C) => Seed, in which de_{B} is the primary public key.

It should be noted that, when acquiring the operation data of the target vehicle, the permission and authorization of the owner of the target vehicle need to be acquired.

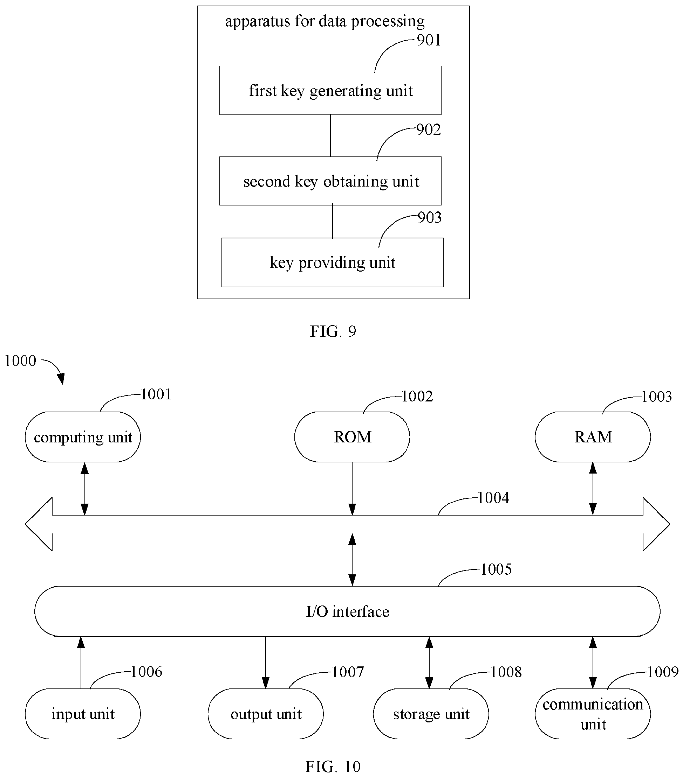

As illustrated in FIG. 9, a second apparatus for data processing of the embodiment of the invention includes: a first key generating unit 901, a second key obtaining unit 902 and a data sending unit 903.

The first key generating unit 901 is configured to, in response to a data access request sent by a client for a target vehicle, generate a first key for performing user identity verification, in which the first key is generated using a user ID corresponding to a user and a primary public key corresponding to a third party.

The second key obtaining unit 902 is configured to obtain a second key sent by the client for the user identity verification, in which the second key is generated using the user ID and a primary private key corresponding to the third party by an authentication center server.

The data sending unit 903 is configured to, in response to the first key being the same as the second key, send operation data corresponding to the target vehicle to the client.

In an embodiment of the invention, the first key generating unit 901 includes: a first key generating sub-unit, configured to, in response to the data access request, generate the first key using the user ID and the primary public key based on a preset key encapsulation mechanism.

As illustrated in FIG. 6, the embodiment of the invention also provides another system for data processing. The system includes: a client 601, an operation data recording device 602, and an authentication center server 603.

The client 601 is configured to send a data access request for a target vehicle to the operation data recording device 602; send a data reading request for the target vehicle to the authentication center server 603; receive a second key sent by the authentication center server 603; send the second key to the operation data recording device 602; receive operation data of the target vehicle sent by the operation data recording device 602.

The operation data recording device 602 is configured to, in response to the data access request, generate a first key for performing user identity verification, in which the first key is generated using a user ID corresponding to a user and a primary public key corresponding to a third party; obtain the second key sent by the client 601; and in response to the first key being the same as the second key, send the operation data of the target vehicle to the client 601.

The authentication center server 603 is configured to, in response to the data reading request, determine a primary private key corresponding to the third party; determine the second key for performing user identity verification using the primary private key and the user ID; and send the second key to the client 601.

In the technical solution of the invention, the acquisition, storage and application of the user's personal information involved are in compliance with the provisions of relevant laws and regulations, and do not violate public order and good customs.

According to the embodiments of the invention, the invention also provides an electronic device and a readable storage medium.

FIG. 10 is a block diagram of an example electronic device 1000 used to implement the embodiments of the invention. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the invention described and/or required herein.

As illustrated in FIG. 10, the electronic device 1000 includes: a computing unit 1001 performing various appropriate actions and processes based on computer programs stored in a read-only memory (ROM) 1002 or computer programs loaded from the storage unit 1008 to a random access memory (RAM) 1003. In the RAM 1003, various programs and data required for the operation of the device 1000 are stored. The computing unit 1001, the ROM 1002, and the RAM 1003 are connected to each other through a bus 1004. An input/output (I/O) interface 1005 is also connected to the bus 1004.

Components in the device 1000 are connected to the I/O interface 1005, including: an inputting unit 1006, such as a keyboard, a mouse; an outputting unit 1007, such as various types of displays, speakers; a storage unit 1008, such as a disk, an optical disk; and a communication unit 1009, such as network cards, modems, and wireless communication transceivers. The communication unit 1009 allows the device 1000 to exchange information/data with other devices through a computer network such as the Internet and/or various telecommunication networks.

The computing unit 1001 may be various general-purpose and/or dedicated processing components with processing and computing capabilities. Some examples of computing unit 1001 include, but not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 1001 executes the various methods and processes described above, such as the method for data processing. For example, in some embodiments, the method for data processing may be implemented as a computer software program, which is tangibly contained in a machine-readable medium, such as the storage unit 1008. In some embodiments, part or all of the computer program may be loaded and/or installed on the device 1000 via the ROM 1002 and/or the communication unit 1009. When the computer program is loaded on the RAM 1003 and executed by the computing unit 1001, one or more steps of the method for data processing described above may be executed. Alternatively, in other embodiments, the computing unit 1001 may be configured to perform the method for data processing in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the invention may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the invention, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but not limited to, an electronic, magnetic, optical, electromagnetic, infrared, or semiconductor system, apparatus, or device, or any suitable combination of the foregoing. More specific examples of machine-readable storage medium include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server may be a cloud server, a server of a distributed system, or a server combined with a block-chain.

It should be understood that the various forms of processes shown above can be used to reorder, add or delete steps. For example, the steps described in the invention could be performed in parallel, sequentially, or in a different order, as long as the desired result of the technical solution disclosed in the invention is achieved, which is not limited herein.

## Claims

1. A method for data processing, performed by an operation data recording device (602), comprising:
in response to a data access request sent by a client (601) for a target vehicle, generating (S201) symmetric keys for symmetrically encrypting operation data of the target vehicle, wherein the symmetric keys are generated based on a user ID and a primary public key for a third party, and the user ID is carried in the data access request;
obtaining (S202) target encrypted data by symmetrically encrypting the operation data using the symmetric keys; and
sending (S203) the target encrypted data to the client.

2. The method of claim 1, wherein generating the symmetric keys for symmetrically encrypting the operation data of the target vehicle, comprises:
in response to the user being a target user, generating the symmetric keys by using the user ID and the primary public key based on a preset key encapsulation mechanism.

3. The method of claim 1 or 2, wherein determining the target user comprises:
determining an identity of the user based on the user ID; and
in response to the identity of the user satisfying preset conditions, determining the user as the target user.

4. The method of any one of claims 1-3, wherein obtaining the target encrypted data by symmetrically encrypting the operation data using the symmetric keys, comprises:
generating the target encrypted data by symmetrically encrypting the operation data using the symmetric keys based on a preset data encapsulation mechanism.

5. A method for data processing, performed by an authentication center server (603), comprising:
in response to a data reading request sent by a client for target encrypted data, determining (S301) a primary private key for a third party, wherein the target encrypted data is obtained by an operation data recording device symmetrically encrypting operation data of a target vehicle using symmetric keys, and the symmetric keys are generated by the operation data recording device based on a user ID and a primary public key for the third party;
determining (S302) the symmetric keys based on the primary private key and the user ID; and
sending (S303) the symmetric keys to the client.

6. The method of claim 7, wherein determining the primary private key for the third party, comprises:
in response to the user being a target user, generating the primary private key randomly with a random number generator.

7. The method of claim 7 or 8, wherein in response to the target user being a target law enforcement officer, determining the target user comprises:
determining an identity of the user based on the user ID; and
in response to the identity of the user satisfying preset conditions, determining the user as the target user.

8. The method of claim 7 or 8, wherein in response to the target user being a vehicle owner, determining the target user comprises:
performing real-name authentication on the user;
in response to the real-name authentication being passed, determining an identity of the user based on the user ID; and
in response to the identity of the user satisfying preset conditions, determining the user as the target user.

9. The method of claim 7, wherein determining the symmetric keys based on the primary private key and the user ID, comprises:
generating the symmetric keys using the primary private key and the user ID based on a preset key decapsulation mechanism.

10. A system for data processing, comprising: a client (601), an operation data recording device (602), and an authentication center server (603); wherein
the client is configured to send a data access request for a target vehicle to the operation data recording device; receive target encrypted data sent by the operation data recording device; send a data reading request for the target encrypted data to the authentication center server; receive the symmetric keys sent by the authentication center server; and obtain operation data by decrypting the target encrypted data using the symmetric keys;
the operation data recording device is configured to, in response to the data access request, generate the symmetric keys for symmetrically encrypting the operation data, wherein the symmetric keys are generated based on a user ID and a primary public key for a third party, and the user ID is carried in the data access request; obtain the target encrypted data by symmetrically encrypting the operation data using the symmetric keys; and send the target encrypted data to the client; and
the authentication center server is configured to, in response to the data reading request, determine a primary private key for the third party; determine the symmetric keys based on the primary private key and the user ID; and send the target encrypted data to the client.

11. A method for data processing, performed by an operation data recording device, comprising:
in response to a data access request sent by a client for a target vehicle, generating (S801) a first key for performing user identity verification, wherein the first key is generated by the operation data recording device based on a user ID and a primary public key for a third party, and the user ID is carried in the data access request;
obtaining (S802) a second key sent by the client for performing user identity verification, wherein the second key is generated based on the user ID and a primary private key for the third party by an authentication center server; and
in response to the first key being the same as the second key, sending (S803) operation data corresponding to the target vehicle to the client.

12. The method of claim 11, wherein generating the first key for performing user identity verification comprises:
in response to the data access request, generating the first key using the user ID and the primary public key based on a preset key encapsulation mechanism.

13. A system for data processing, comprising: a client (601), an operation data recording device (602), and an authentication center server (603); wherein
the client is configured to send a data access request for a target vehicle to the operation data recording device; send a data reading request for the target vehicle to the authentication center server; receive a second key sent by the authentication center server; send the second key to the operation data recording device; receive operation data of the target vehicle sent by the operation data recording device;
the operation data recording device is configured to, in response to the data access request, generate a first key for performing user identity verification, wherein the first key is generated based on a user ID and a primary public key for a third party, and the user ID is carried in the data access request; obtain the second key sent by the client; and in response to the first key being the same as the second key, send the operation data of the target vehicle to the client; and
the authentication center server is configured to, in response to the data reading request, determine a primary private key for the third party; determine the second key for performing user identity verification based on the primary private key and the user ID; and send the second key to the client.

14. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any one of claims 1-4, 5-9 and 11-12.

15. A non-transitory computer-readable storage medium having computer instructions stored thereon, wherein the computer instructions are configured to cause a computer to implement the method of any one of claims 1-4, 5-9 and 11-12.
